# EUROPEAN PATENT SPECIFICATION

(11) **EP 3 421 845 B1**
(45) Date of publication and mention of the grant of the patent: **17.02.2021**
(21) Application number: 17898336.7
(22) Date of filing: 28.03.2017
(51) Int. Cl.: F16H 61/4078, B60K 31/00, E02F 9/20, F16H 61/47

(54) **WORK VEHICLE**
NUTZFAHRZEUG
VÉHICULE UTILITAIRE

(43) Date of publication of application: 02.01.2019
(73) Proprietor: Hitachi Construction Machinery Co., Ltd., Tokyo 110-0015 (JP)
(72) Inventor: KAYANE Masahiro, Tsuchiura-shi Ibaraki 300-0013 (JP); KODAKA Katsuaki, Tsuchiura-shi Ibaraki 300-0013 (JP)
(74) Representative: Manitz Finsterwald Patent- und Rechtsanwaltspartnerschaft mbB
(86) International application number: PCT/JP2017/012763
(87) International publication number: WO 2018/179113

(56) References cited:
- WO-A1-2008/094114
- WO-A1-2017/036492
- JP-A- 2007 170 131
- JP-A- 2008 082 030
- JP-A- 2012 067 829
- JP-A- 2012 188 861
- JP-A- 2016 008 655
- JP-A- 2016 098 985
- US-A1- 2012 179 341
- US-A1- 2016 082 962
- DATABASE WPI Week 201404 Thomson Scientific, London, GB; AN 2013-T80830 XP002796112, -& JP 2013 227799 A (ISEKI AGRIC MACH MFG CO LTD) 7 November 2013 (2013-11-07)

## Description

### TECHNICAL FIELD

The present invention relates to work vehicles, such as a wheel type working machine.

### BACKGROUND ART

A work vehicle which is equipped with an auto-cruise control section for allowing the work vehicle to automatically travel at a preset constant speed according to an operator's selection of an auto-cruise travel mode is known (see, for example, Patent Literature 1).

The conventional work vehicle described in Patent Literature 1 determines, if the travel mode at the time the operator selects the auto-cruise travel mode is a normal travel mode, the maximum vehicle speed in a preset normal mode table as a speed to be kept during the auto-cruise. In contrast, if the travel mode at the time the operator selects the auto-cruise travel mode is an at-work travel mode, the conventional work vehicle determines the maximum vehicle speed in a preset at-work mode table as a speed to be kept during the auto-cruise. The maximum vehicle speed in the at-work mode table is set by an operator's manipulation of an upper speed limit dial switch mounted on the work vehicle.

The normal travel mode refers to a travel mode of the work vehicle in which it can travel along an ordinary road and the at-work travel mode refers to a travel mode of the work vehicle while it performs some kind of work. The maximum vehicle speed of the work vehicle in the at-work travel mode is set at a lower speed than the maximum vehicle speed of the work vehicle in the normal travel mode.

Since the conventional work vehicle is configured in the above manner, it can automatically cruise at a high speed at which traveling along an ordinary road is allowed and can also automatically cruise at a low speed at which some kind of work can be performed.

### CITATION LIST

### PATENT LITERATURE

PATENT LITERATURE 1: JP-A No. 2012-067829

### SUMMARY OF INVENTION

### TECHNICAL PROBLEM

However, in the conventional work vehicle, when the operator selects the auto-cruise travel mode during travel in the at-work travel mode, the speed to be kept during auto-cruise is automatically determined based on the preset at-work mode table. Therefore, the traveling speed of the work vehicle may not match the work to be performed.

In this case, the operator has to perform the tasks of first cancelling the auto-cruise, operating the upper speed limit dial switch to do the setting of the maximum vehicle speed in the at-work mode table again, then allowing the work vehicle to travel in the at-work travel mode again, and selecting the auto-cruise travel mode, which reduces the operating efficiency of the work vehicle.

The present invention has been made in consideration of the above actual circumstances of the conventional technique and an object thereof is to provide a work vehicle that can set the speed to be kept during auto-cruise according to contents of work.

### SOLUTION TO PROBLEM

To solve the above problem, the present invention is directed to a work vehicle including: a vehicle body; wheels provided under the vehicle body; a front working device mounted vertically pivotally to the vehicle body; an engine mounted on the vehicle body; a hydraulic pump capable of being driven by the engine; a hydraulic cylinder capable of being extended and retracted by a pressure oil discharged from the hydraulic pump to operate the front working device; a traveling motor capable of being driven by the pressure oil discharged from the hydraulic pump to rotate the wheels; a vehicle speed sensor that detects a vehicle speed based on a rotational speed of the traveling motor; an operating lever through which the hydraulic cylinder is operated; an operating pedal based on a manipulated variable of which the traveling motor is operated; and a directive device through which an auto-cruise function of keeping the vehicle speed at a first speed is switched between a valid state and an invalid state, characterized in that the work vehicle further includes a control device that performs, in case that the operating lever is manipulated in a state where the auto-cruise function is switched to the valid state by the directive device and where the traveling motor is driven, a control for changing the vehicle speed from the first speed to a second speed lower than the first speed and keeping the second speed.

### ADVANTAGEOUS EFFECTS OF INVENTION

The present invention enables setting of the speed to be kept during auto-cruise according to a work to be performed, thus improving the operating efficiency of the work vehicle. Problems, structures, and effects other than those above will become apparent from the description of the following embodiment.

### BRIEF DESCRIPTION OF DRAWINGS

[Fig. 1] Fig. 1 is an external view of a wheel type hydraulic excavator according to an embodiment.
[Fig. 2] Fig. 2 is a hydraulic circuit diagram showing a hydraulic control device of the wheel type hydraulic excavator according to the embodiment.
[Fig. 3] Fig. 3 is a block diagram showing the configuration of an auto-cruise controller according to the embodiment.
[Fig. 4] Fig. 4 is a graph showing a relation between manipulated variable for travel and pressure of a proportional valve during travel-only operation independent of the auto-cruise controller according to the embodiment.
[Fig. 5] Fig. 5 is a flowchart showing an operation procedure of the auto-cruise controller according to the embodiment.

### DESCRIPTION OF EMBODIMENT

Hereinafter, a description will be given of an embodiment of a work vehicle according to the present invention by taking as an example a wheel type hydraulic excavator with reference to the drawings.

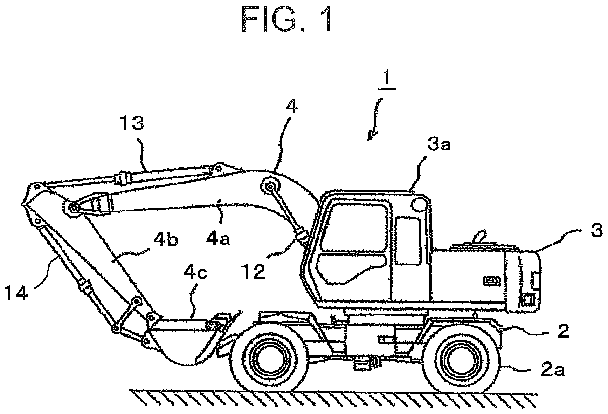

As shown in Fig. 1, a wheel type hydraulic excavator 1 according to an embodiment includes a wheel type traveling body 2 having a four-wheel structure equipped with tires 2a. Moreover, an upperstructure 3 including a cab 3a and so on is provided swingably on the top of the wheel type traveling body 2. Furthermore, a front working device 4 having a three-jointed link structure formed of a boom 4a, an arm 4b, and a bucket 4c is provided at the front of the upperstructure 3.

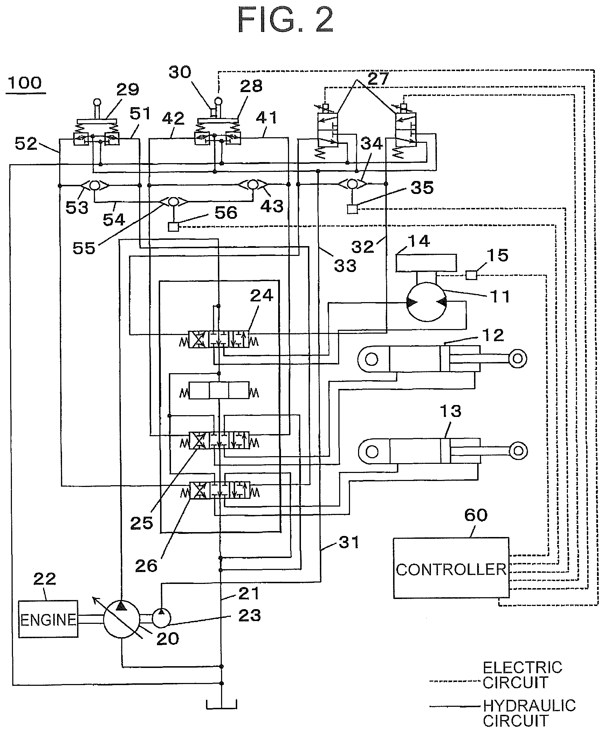

The wheel type traveling body 2, upperstructure 3, boom 4a, arm 4b, and bucket 4c are actuated by a pressure oil discharged from a hydraulic pump. Fig. 2 shows a hydraulic control device 100 of the wheel type hydraulic excavator 1 according to the embodiment.

As shown in Fig. 2, the hydraulic control device 100 according to the embodiment includes a traveling hydraulic motor 11 for driving the undercarriage 2, a boom hydraulic cylinder 12 for actuating the boom 4a, and an arm hydraulic cylinder 13 for actuating the arm 4b. Note that a swing hydraulic motor for driving the upperstructure 3 and a bucket hydraulic cylinder for actuating the bucket 4c are not shown for simplicity of explanation. The boom hydraulic cylinder 12, the arm hydraulic cylinder 13, and the unshown bucket hydraulic cylinder may be herein collectively referred to as "working hydraulic actuators".

An output shaft of the traveling hydraulic motor 11 is connected to a transmission 14 and an output shaft of the transmission 14 is transmitted through an unshown power transmission mechanism, such as an axle shaft, to the tires 2a. Furthermore, the output shaft of the traveling hydraulic motor 11 is provided with a vehicle speed detection sensor 15.

The transmission 14 is a two-speed reduction gear and its reduction ratio is shifted between a high speed stage and a low speed stage by flipping an unshown travel mode selection switch provided in the cab 3a from one position to another. Specifically, when the travel mode selection switch is flipped to a slow speed mode side, the reduction ratio of the transmission 14 is shifted from the high speed stage to the low speed stage. When the travel mode selection switch is flipped to a normal travel mode side, the reduction ratio of the transmission 14 is shifted from the low speed stage to the high speed stage.

A pressure oil discharged from a main pump 20 is supplied through a main pipe line 21 to the traveling hydraulic motor 11 and the working hydraulic actuators. The main pump 20 is a variable displacement hydraulic pump and is driven by an engine 22. The engine 22 also drives a pilot pump 23 formed of a fixed displacement hydraulic pump.

A traveling directional control valve 24 for controlling the operation of the traveling hydraulic motor 11 is provided between the main pump 20 and the traveling hydraulic motor 11. Moreover, a boom directional control valve 25 for controlling the operation of the boom hydraulic cylinder 12 is provided between the main pump 20 and the boom hydraulic cylinder 12. Furthermore, an arm directional control valve 26 for controlling the operation of the arm hydraulic cylinder 13 is provided between the main pump 20 and the arm hydraulic cylinder 13. These directional control valves 24, 25, 26 are hydraulic pilot-operated spool valves and are actuated by respective operating pilot pressures output from a travel control proportional solenoid valve unit 27, a boom manipulator 28, and an arm manipulator 29.

The travel control proportional solenoid valve unit 27 is operated by depressing an unshown traveling manipulator, such as an accelerator pedal, provided in the cab 3a. The boom manipulator 28 and the arm manipulator 29 are also provided in the cab 3a. The boom manipulator 28 is provided with an auto-cruise switch 30 capable of being operated by an operator.

The boom directional control valve 25, the arm directional control valve 26, and an unshown bucket directional control valve may be herein collectively referred to as "working directional control valves". Furthermore, the boom manipulator 28, the arm manipulator 29, and an unshown bucket manipulator may be herein collectively referred to as "working manipulators".

A pilot pressure discharged from the pilot pump 23 is supplied through a supply pipe line 31 to the travel control proportional solenoid valve unit 27, the boom manipulator 28, and the arm manipulator 29. The travel control proportional solenoid valve unit 27, the boom manipulator 28, and the arm manipulator 29 generate their respective pilot pressures according to their manipulated variables and manipulating directions to shift the traveling directional control valve 24, the boom directional control valve 25, and the arm directional control valve 26, respectively.

Specifically, the travel control proportional solenoid valve unit 27 is connected through pilot pipe lines 32, 33 to hydraulic pilot portions of the traveling directional control valve 24 and the pilot pipe lines 32, 33 are connected to both ends of a shuttle valve 34. The shuttle valve 34 is a high-pressure priority shuttle valve that selects a higher one of the pressure in the pilot pipe line 32 and the pressure in the pilot pipe line 33 as a pilot pressure for operating the traveling directional control valve 24. The pilot pressure selected by the shuttle valve 34 is detected by a traveling manipulated variable pressure sensor 35.

Moreover, the boom manipulator 28 is connected through pilot pipe lines 41, 42 to hydraulic pilot portions of the boom directional control valve 25 and the pilot pipe lines 41, 42 are connected to both ends of a shuttle valve 43. The shuttle valve 43 is a high-pressure priority shuttle valve that selects a higher one of the pressure in the pilot pipe line 41 and the pressure in the pilot pipe line 42 as a pilot pressure for operating the boom directional control valve 25.

Furthermore, the arm manipulator 29 is connected through pilot pipe lines 51, 52 to hydraulic pilot portions of the arm directional control valve 26 and the pilot pipe lines 51, 52 are connected to both ends of a shuttle valve 53. The shuttle valve 53 is a high-pressure priority shuttle valve that selects a higher one of the pressure in the pilot pipe line 51 and the pressure in the pilot pipe line 52 as a pilot pressure for operating the arm directional control valve 26.

The shuttle valve 43 and the shuttle valve 53 are connected through a pressure detection pipe line 54 to each other and the pressure detection pipe line 54 is provided with a high-pressure priority shuttle valve 55 that selects a higher one of the pilot pressure selected by the shuttle valve 43 and the pilot pressure selected by the shuttle valve 53. The pilot pressure selected by the shuttle valve 55 is detected by a front manipulated variable pressure sensor 56.

An output signal of the vehicle speed detection sensor 15, an output signal of the auto-cruise switch 30, an output signal of the traveling manipulated variable pressure sensor 35, and an output signal of the front manipulated variable pressure sensor 56 are input to a controller 60. The controller 60 controls the traveling state of the wheel type traveling body 2 based on these output signals.

The traveling directional control valve 24 and the working directional control valves including the boom directional control valve 25 and the arm directional control valve 26 are three-position, tandem center valves, wherein the normal valve position is set at a neutral position.

These directional control valves are configured selectively changeably from their neutral position to a direction of a first selection position or a direction of a second selection position. The flow direction and flow rate of the pressure oil to be supplied from the main pump 20 to each of the traveling hydraulic motor 11 and the working hydraulic actuators including the boom hydraulic cylinder 12 and the arm hydraulic cylinder are controlled by operating the valve position from the neutral position to the direction of the first selection position or the direction of the second selection position. In this manner, the traveling hydraulic motor 11 and the working hydraulic actuators are actuated by specified amounts in specified directions by operating the working manipulators.

The pressure oil discharged from the main pump 20 and having passed through the traveling directional control valve 24 and the working directional control valves is returned to a hydraulic oil tank 16.

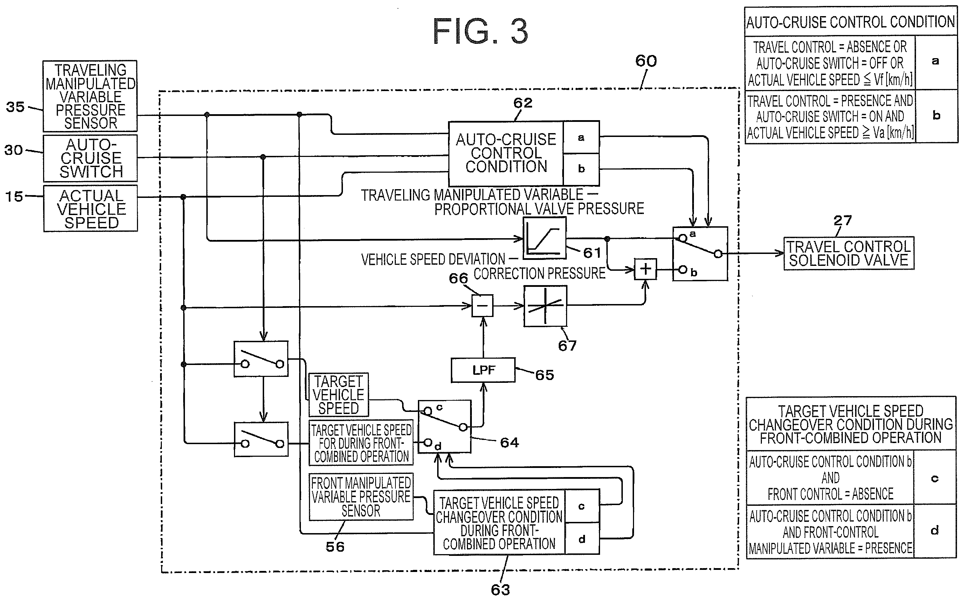

A description will be given below of the structure and operation of the controller 60 according to the embodiment with reference to Figs. 3 to 5.

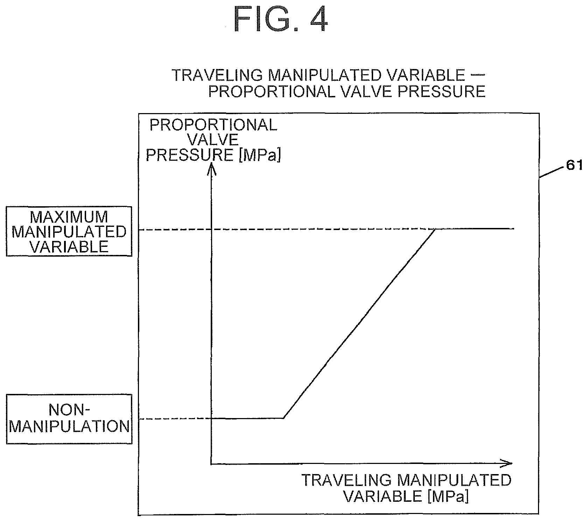

As shown in Fig. 3, the controller 60 previously stores a traveling manipulated variable-proportional valve pressure table 61 indicating the relation between the amount of depression of the accelerator pedal and the pressure of the proportional valve when the auto-cruise switch 30 is off and during travel-only operation (during non-front-combined operation). In the traveling manipulated variable-proportional valve pressure table 61, as shown on an enlarged scale in Fig. 4, changes in the pressure of the proportional valve according to the manipulated variable of the accelerator pedal from a non-manipulation state to manipulation at a maximum manipulated variable are stored as a characteristic diagram in graph form in which the traveling manipulated variable is put on the horizontal axis and the pressure of the proportional valve is put on the vertical axis.

Meanwhile, as shown in Fig. 3, when the wheel type traveling body 2 is operated alone and the auto-cruise switch 30 is turned on, the controller 60 stores an actual vehicle speed at the time as a target vehicle speed. Furthermore, when the wheel type traveling body 2 and the front working device 4 are operated in combination (hereinafter, this operating condition is referred to as "during front-combined operation") and the auto-cruise switch 30 is turned on, the controller 60 stores an actual vehicle speed at the time as a target vehicle speed for during front-combined operation. The settings of the above target vehicle speed and target vehicle speed for during front-combined operation can be changed using an external tool, an input device mounted on the vehicle body, or others.

Therefore, by changing the settings using the external tool, the input device mounted on the vehicle body or others, the operator can set the minimum speed of the wheel type hydraulic excavator 1 at a specified vehicle speed at which the wheel type traveling body 2 and the front working device 4 can be operated in combination, for example, at 1 to 2 km/h.

The controller 60 further includes, as shown in Fig. 3, an auto-cruise control condition determining section 62, a target vehicle speed changeover condition determining section 63, and a target vehicle speed selecting section 64 that changes, according to a determination result of the target vehicle speed changeover condition determining section 63, the target vehicle speed for auto-cruise control to the target vehicle speed for during front-combined operation or the vehicle speed of the wheel type hydraulic excavator 1 at the time of turn-on of the auto-cruise switch 30.

When, during running of the engine 22, no travel control signal is input from the traveling manipulated variable pressure sensor 35 to the auto-cruise control condition determining section 62, the auto-cruise switch 30 is off or the actual speed of the wheel type hydraulic excavator 1 is equal to or less than a predetermined specified speed, for example, Vf ≤ 0.3 km/h, the auto-cruise control condition determining section 62 determines that the auto-cruise control condition is "a". In this case, the controller 60 does not perform auto-cruise control of the wheel type hydraulic excavator 1 but controls the travel control proportional solenoid valve unit 27 according to the manipulation of the accelerator.

In contrast to this, when, during running of the engine 22, a signal indicating that the wheel type traveling body 2 is traveling is input from the traveling manipulated variable pressure sensor 35 to the auto-cruise control condition determining section 62, the auto-cruise switch 30 is on, and the actual speed of the wheel type hydraulic excavator 1 is equal to or more than a predetermined specified speed, for example, Va ≥ 8 km/h, the auto-cruise control condition determining section 62 determines that the auto-cruise control condition is "b". In this case, the controller 60 controls the travel control proportional solenoid valve unit 27 to allow the wheel type hydraulic excavator 1 to automatically cruise.

When the auto-cruise control condition is determined to be "b" by the auto-cruise control condition determining section 62 and no signal indicating that the front working device 4 is in operation is input from the front manipulated variable pressure sensor 56 to the target vehicle speed changeover condition determining section 63, the target vehicle speed changeover condition determining section 63 determines that the target vehicle speed changeover condition is "c", and sets the target speed of the wheel type hydraulic excavator 1 at a speed at the time of turn-on of the auto-cruise switch 30. Thus, the wheel type hydraulic excavator 1 can automatically cruise at a vehicle speed of 8 km/h or more and the maximum vehicle speed or less. Therefore, the wheel type hydraulic excavator 1 can automatically cruise even on an ordinary road.

In contrast to this, when the auto-cruise control condition is determined to be "b" by the auto-cruise control condition determining section 62 and a signal indicating that the front working device 4 is in operation is input from the front manipulated variable pressure sensor 56 to the target vehicle speed changeover condition determining section 63, the target vehicle speed changeover condition determining section 63 determines that the target vehicle speed changeover condition is "d", and sets the target speed of the wheel type hydraulic excavator 1 at the target vehicle speed for during front-combined operation. Thus, the wheel type hydraulic excavator 1 is automatically reduced in speed from a traveling state at a vehicle speed of 8 km/h or more and the maximum vehicle speed or less to a vehicle speed of approximately 1 to 2 km/h at which the front-combined operation is possible, and is allowed to automatically cruise at the vehicle speed at which the front-combined operation is possible.

In this manner, the auto-cruise controller of the wheel type hydraulic excavator 1 according to the embodiment ensures that the vehicle speed for auto-cruise during front-combined operation is always the vehicle speed at which the front-combined operation is possible, thus increasing the working efficiency of the wheel type hydraulic excavator 1.

The target speed selected by the target vehicle speed selecting section 64 is input through a low-pass filter 65 to a subtracter 66 and a deviation thereof from the actual vehicle speed detected by the vehicle speed detection sensor 15 is calculated by the subtracter 66. Furthermore, based on the vehicle speed deviation calculated by the subtracter 66, a correction pressure for the traveling manipulated variable pressure sensor 35 is calculated by a vehicle speed deviation-correction pressure calculator 67. Thus, the actuation of the travel control proportional solenoid valve unit 27 is controlled.

Since in the auto-cruise controller of the wheel type hydraulic excavator 1 according to the embodiment, the target speed selected by the target vehicle speed selecting section 64 is input through the low-pass filter 65 to the subtracter 66, even if the difference between the actual vehicle speed and the target vehicle speed is large, a speed change of the wheel type hydraulic excavator 1 can be made gentle, thus reducing a sense of discomfort that may be given to the operator.

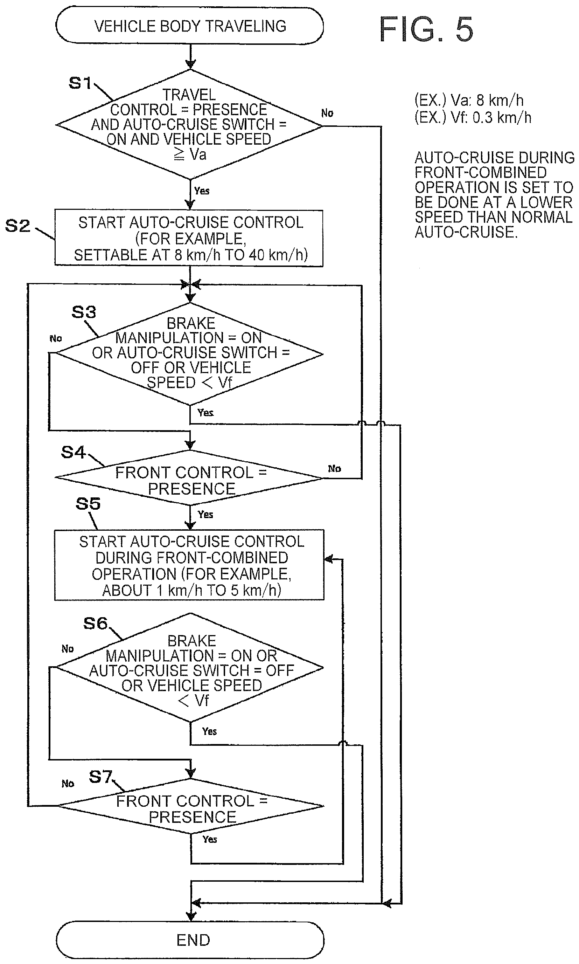

A detailed description will be given below of the operation of the auto-cruise controller according to the embodiment using the flowchart shown in Fig. 5.

When, with the wheel type traveling body 2 being capable of traveling, the auto-cruise control condition determining section 62 determines that the auto-cruise control condition is "b" (Yes in step S1), the controller 60 starts an auto-cruise control of allowing the wheel type hydraulic excavator 1 to cruise at a vehicle speed at the time of turn-on of the auto-cruise switch 30 (step S2). If the determination in step S1 is No, the auto-cruise control is terminated and the wheel type hydraulic excavator 1 is allowed to travel at a vehicle speed according to the amount of depression of the accelerator pedal.

Also when, with the wheel type hydraulic excavator 1 subjected to the auto-cruise control at the vehicle speed at the time of turn-on of the auto-cruise switch 30, an unshown brake is manipulated, the auto-cruise switch 30 is turned off or the vehicle speed reaches below Vf (Yes in step S3), the auto-cruise control is terminated.

If the determination in step S3 is No and the front working device 4 is operated (Yes in step S4), an auto-cruise control is started at the vehicle speed for during front-combined operation (step S5). If the determination in step S4 is No, the process goes back to step S3 and repeats steps S3 and S4.

Also when, with the auto-cruise control started at the vehicle speed for during front-combined operation, an unshown brake is manipulated, the auto-cruise switch 30 is turned off or the vehicle speed reaches below Vf (Yes in step S6), the auto-cruise control is terminated.

If the determination in step S6 is No, the process proceeds to step S7, wherein it is determined whether or not the actuation of the front working device 4 is continued within a specified period of time, for example, two to three seconds. If it is determined in step S7 that the actuation of the front working device 4 is continued (Yes in step S7), the process goes back to step S5 and the auto-cruise control at the vehicle speed for during front-combined operation is continued. If it is determined in step S7 that the actuation of the front working device 4 is stopped (No in step S7), the process goes back to step S3 and the wheel type hydraulic excavator 1 is subjected to the auto-cruise control at the vehicle speed at the time of turn-on of the auto-cruise switch 30.

Thus, for example, in performing the work for flattening the ground surface of a green belt provided at a roadside with the bucket 4c, the work for flattening the ground surface of the green belt provided at the roadside with the bucket 4c by actuating the front working device 4 while subjecting the wheel type hydraulic excavator 1 to the auto-cruise control at the vehicle speed for during front-combined operation can be followed by, without doing a selection operation of the auto-cruise switch 30, the work for stopping the actuation of the front working device 4 to allow the wheel type hydraulic excavator 1 to automatically cruise at the vehicle speed at the time of turn-on of the auto-cruise switch 30 until when the wheel type hydraulic excavator 1 reaches the next green belt. Therefore, the working efficiency of the wheel type hydraulic excavator 1 can be improved.

embodiment has been given by taking as an example the auto-cruise controller of the wheel type hydraulic excavator 1, the present invention can also be applied to hydraulic control devices of wheel type working machines other than the wheel type hydraulic excavator.

Furthermore, although the above embodiment is configured to switch the auto-cruise control on and off by turning the auto-cruise switch 30 on and off, the gist of the present invention is not limited to this configuration, but may be configured to start the auto-cruise control at the vehicle speed for during front-combined operation by shifting the transmission 14 to the low-speed stage using an unshown travel mode selection switch provided in the cab 3a. In this case, the travel mode selection switch functions, like the auto-cruise switch 30, as an auto-cruise selecting section.

### REFERENCE SIGNS LIST

1 ... wheel type hydraulic excavator
2 ... wheel type traveling body
3 ... upperstructure
4 ... front working device
22 ... engine
27 ... travel control proportional solenoid valve unit
28 ... boom manipulator
29 ... arm manipulator
30 ... auto-cruise switch
35 ... traveling manipulated variable pressure sensor
56 ... front manipulated variable pressure sensor
60 ... controller
61 ... traveling manipulated variable-proportional valve pressure table
62 ... auto-cruise control condition determining section
63 ... target vehicle speed changeover condition determining section
64 ... target vehicle speed selecting section
65 ... low-pass filter
66 ... subtracter
67 ... vehicle speed deviation-correction pressure calculator

## Claims

1. A work vehicle comprising:
a vehicle body (2);
wheels (2a) provided under the vehicle body (2);
a front working device (4) mounted vertically pivotally to the vehicle body (2);
an engine (22) mounted on the vehicle body (2);
a hydraulic pump (20) capable of being driven by the engine (22) ;
a hydraulic cylinder (12,13) capable of being extended and retracted by a pressure oil discharged from the hydraulic pump (20) to operate the front working device (4);
a traveling motor (11) capable of being driven by the pressure oil discharged from the hydraulic pump (20) to rotate the wheels (2a) ;
a vehicle speed sensor (15) that detects a vehicle speed based on a rotational speed of the traveling motor (11);
an operating lever (28,29) through which the hydraulic cylinder (12,13) is operated;
an operating pedal based on a manipulated variable of which the traveling motor (11) is operated; and
a directive device (30) through which an auto-cruise function of keeping the vehicle speed at a first speed is switched between a valid state and an invalid state,
**characterized in that** the work vehicle further comprises a control device (60) that performs, in case that the operating lever (28,29) is manipulated in a state where the auto-cruise function is switched to the valid state by the directive device (30) and where the traveling motor (11) is driven, a control for changing the vehicle speed from the first speed to a second speed lower than the first speed and keeping the second speed.

2. The work vehicle according to claim 1, wherein in case that a non-manipulation state of the operating lever (28,29) is continued for a preset specified period of time since a time based on when the operating lever (28,29) is manipulated in the state where the auto-cruise function is switched to the valid state by the directive device (30) and where the traveling motor (11) is driven, the control device (60) changes the vehicle speed to the first speed.

## Patentansprüche

1. Arbeitsfahrzeug, umfassend:
einen Fahrzeugaufbau (2);
Räder (2a), die unter dem Fahrzeugaufbau (2) vorgesehen sind;
eine vordere Arbeitsvorrichtung (4), die vertikal schwenkbar an dem Fahrzeugaufbau (2) montiert ist;
eine Maschine (22), die an dem Fahrzeugaufbau (2) montiert ist;
eine Hydraulikpumpe (20), die durch die Maschine (22) antreibbar ist;
einem Hydraulikzylinder (12, 13), der durch ein von der Hydraulikpumpe (20) abgegebenes Drucköl aus- und eingefahren werden kann, um die vordere Arbeitsvorrichtung (4) zu betätigen;
einen Fahrmotor (11), der durch das von der Hydraulikpumpe (20) abgegebene Drucköl antreibbar ist, um die Räder (2a) zu drehen;
einen Fahrzeuggeschwindigkeitssensor (15), der eine Fahrzeuggeschwindigkeit basierend auf einer Drehgeschwindigkeit des Fahrmotors (11) erfasst;
einen Bedienhebel (28, 29), über den der Hydraulikzylinder (12, 13) betätigt wird;
ein Bedienpedal, auf einer Stellgröße desselben basierend der Fahrmotor (11) betätigt wird; und
eine Anweisungsvorrichtung (30), durch die eine Funktion einer automatischen Fahrgeschwindigkeitseinstellung zum Halten der Fahrzeuggeschwindigkeit auf einer ersten Geschwindigkeit zwischen einem gültigen Zustand und einem ungültigen Zustand umgeschaltet wird,
**dadurch gekennzeichnet, dass** das Arbeitsfahrzeug ferner eine Steuervorrichtung (60) umfasst, die für den Fall, dass der Bedienhebel (28, 29) in einem Zustand betätigt wird, in dem die Funktion einer automatischen Fahrgeschwindigkeitseinstellung durch die Anweisungsvorrichtung (30) in den gültigen Zustand geschaltet ist und in dem der Fahrmotor (11) angetrieben wird, eine Steuerung zum Ändern der Fahrzeuggeschwindigkeit von der ersten Geschwindigkeit zu einer zweiten Geschwindigkeit, die niedriger als die erste Geschwindigkeit ist, und zum Halten der zweiten Geschwindigkeit durchführt.

2. Arbeitsfahrzeug nach Anspruch 1, wobei für den Fall, dass ein Nichtbetätigungszustand des Bedienhebels (28, 29) für eine voreingestellte spezifizierte Zeitspanne seit einem Zeitpunkt fortgesetzt wird, der darauf basiert, dass der Bedienhebel (28, 29) in dem Zustand betätigt wird, in dem die Funktion einer automatischen Fahrgeschwindigkeitseinstellung durch die Anweisungsvorrichtung (30) in den gültigen Zustand geschaltet ist und in dem der Fahrmotor (11) angetrieben wird, die Steuervorrichtung (60) die Fahrzeuggeschwindigkeit zu der ersten Geschwindigkeit ändert.

## Revendications

1. Véhicule de chantier comprenant :
un corps de véhicule (2) ;
des roues (2a) prévues sous le corps de véhicule (2) ;
un dispositif de travail avant (4) monté verticalement de manière pivotante sur le corps de véhicule (2) ;
un moteur (22) monté sur le corps de véhicule (2) ;
une pompe hydraulique (20) capable d'être entraînée par le moteur (22) ;
un vérin hydraulique (12, 13) capable d'être étendu et rétracté par une huile sous pression refoulée par la pompe hydraulique (20) pour actionner le dispositif de travail avant (4) ;
une motrice de déplacement (11) capable d'être entraînée par l'huile sous pression refoulée par la pompe hydraulique (20) pour mettre les roues (2a) en rotation ;
un capteur de vitesse de véhicule (15) qui détecte une vitesse du véhicule sur la base d'une vitesse de rotation de la motrice de déplacement (11) ;
un levier d'actionnement (28, 29) qui permet d'actionner le vérin hydraulique (12, 13) ;
une pédale d'actionnement sur la base d'une variable de manipulation suivant laquelle la motrice de déplacement (11) est actionnée ; et
un dispositif directeur (30) au moyen duquel une fonction de conduite automatique consistant à maintenir la vitesse du véhicule à une première vitesse est commutée entre un état valide et un état non valide,
**caractérisé en ce que** le véhicule de chantier comprend en outre un dispositif de commande (60) qui exécute, dans un cas où le levier d'actionnement (28, 29) est manipulé dans un état où la fonction de conduite automatique est commutée à l'état valide par le dispositif directeur (30) et où la motrice de déplacement (11) est entraînée, une commande destinée à changer la vitesse du véhicule depuis la première vitesse vers une seconde vitesse inférieure à la première vitesse et à maintenir la seconde vitesse.

2. Véhicule de chantier selon la revendication 1, dans lequel, dans un cas où un état de non-manipulation du levier d'actionnement (28, 29) est continu pendant une période temporelle spécifiée prédéfinie à partir d'un instant sur la base du moment où le levier d'actionnement (28, 29) est manipulé dans l'état où la fonction de conduite automatique est commutée à l'état valide par le dispositif directeur (30) et où la motrice de déplacement (11) est entraînée, le dispositif de commande (60) change la vitesse du véhicule vers la première vitesse.
